# DEMANDE DE BREVET EUROPEEN

(11) **EP 1 544 756 A1**
(43) Date de publication de la demande: **22.06.2005**
(21) Numéro de dépôt: 04105854.6
(22) Date de dépôt: 17.11.2004
(51) Int. Cl.: G06F 17/30

(54) **Procédé de mise à jour d'une base de données créee avec un tableur**

(30) Priorité: 19.12.2003 FR 0315027
(71) Demandeur: Thales, 92200 Neuilly Sur Seine (FR)
(72) Inventeur: DILLON, Patrick, 94117, ARCUEIL (FR)
(74) Mandataire: Lucas, Laurent Jacques

(57) **Abrégé**

La présente invention concerne un procédé de mise à jour d'une base de données créée avec un tableur, par exemple avec le logiciel informatique Excel.

La manipulation de bases de données dans un tableur peut être source d'erreurs et manque de confort pour en garantir une utilisation efficace. L'invention a notamment pour but de garantir une homogénéité et de faciliter la tache d'un utilisateur dans la création et la maintenance d'une telle base de données.

A cet effet, l'invention a pour objet un procédé de mise à jour. Les données de la base de données sont localisées dans une première plage de cellules (4), et des paramètres de mise à jour sont localisés dans une seconde plage de cellules (8). On applique au moins une fonction de mise à jour à un ensemble déterminé de cellules de la première plage de cellules, chaque fonction de mise à jour utilisant des paramètres de mise à jour contenus dans des cellules déterminées (14, 15, ..., 20) de la seconde plage de cellules.

## Description

La présente invention concerne un procédé de mise à jour d'une base de données créée avec un tableur, par exemple avec le logiciel informatique Excel. L'invention s'applique à des bases de données permettant de concevoir, de gérer et de déployer des architectures de base de systèmes informatiques complexes.

Une base de données représente un ensemble d'informations dont la gestion peut être assurée par un logiciel informatique ("software" dans la littérature anglo-saxonne) appelé système de bases de données (SGBD). Parmi ces logiciels, on peut citer Oracle, Ingres, O₂... Différents logiciels de traitement peuvent manipuler des données extraites d'une base de données. On partage ainsi des données entre différents logiciels de traitement, les données étant mises à jour de façon centralisées avec un SGBD. Cependant, les SGBD sont complexes tant du point de vue de leur installation et de leur maintenance, que du point de vue de leur utilisation.

Dans certaines applications, les données ne sont manipulées que par un seul logiciel de traitement. On peut alors utiliser des tableurs, tel que Excel, qui sont des logiciels d'usage plus simple qu'un SGBD. Les tableurs permettent d'effectuer des traitements élaborés sur des données. Plus précisément, un tableur est un logiciel qui permet la présentation de données sous forme de tableaux et de graphiques, avec une prédisposition pour l'automatisation de calculs sur ces données.

Un tableur permet de manipuler des tableaux de données à deux dimensions. Un élément de base du tableau, localisé par une ligne et une colonne déterminée, est appelé une cellule. Chaque cellule d'un tableau peut être référencée par une adresse, c'est à dire un identifiant unique construit à partir du numéro de la ligne et de la colonne à laquelle la cellule appartient.

Une cellule contient une donnée d'un tableau, par exemple un texte (chaîne de caractères), une valeur numérique, une date... La donnée contenue par une cellule s'appelle la valeur de cette cellule. La valeur d'une cellule peut être le résultat d'une fonction de calcul, cette fonction étant associée à la cellule. La fonction est définie par une formule, par exemple une expression mathématique. La fonction peut utiliser comme argument des références à d'autres cellules, ces références étant remplacées par les valeurs des cellules correspondantes pour effectuer le calcul.

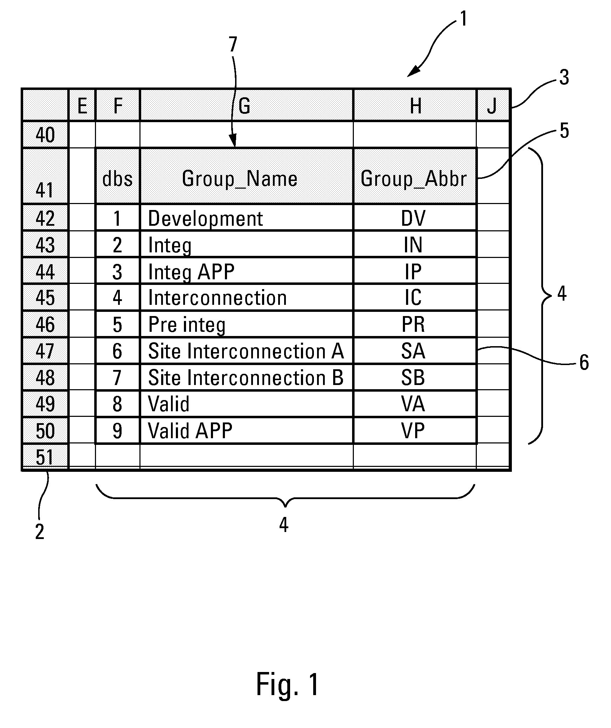

Les tableurs fournissent des fonctions simples (tri, requête, synthèse) pour exploiter des bases de données non relationnelles, une base de données étant formée par un ensemble (ou plage) de cellules tel que représenté sur la figure 1. Cependant, la manipulation de bases de données dans un tableur peut être source d'erreurs et manque de confort pour en garantir une utilisation efficace. L'invention a notamment pour but de garantir une homogénéité et de faciliter la tache d'un utilisateur dans la création et la maintenance d'une telle base de données.

A cet effet, l'invention a pour objet un procédé de mise à jour qui permet de formater la base de données suivant une description donnée par l'utilisateur. Selon l'invention, les données de la base de données sont localisées dans une première plage de cellules (4), et des paramètres de mise à jour sont localisés dans une seconde plage de cellules (8). On applique au moins une fonction de mise à jour à un ensemble déterminé de cellules de la première plage de cellules, chaque fonction de mise à jour utilisant des paramètres de mise à jour contenus dans des cellules déterminées (14, 15, ..., 20) de la seconde plage de cellules.

D'autres caractéristiques et avantages de l'invention apparaîtront à la lecture de la description détaillée suivante présentée à titre d'illustration non limitative et faite en référence aux figures annexées, lesquelles représentent :
- la figure 1, une vue de détail d'un exemple de feuille de calcul, cette vue montrant une plage de cellules contenant une base de données,
- la figure 2, une vue d'ensemble de la feuille de calcul représentée à la figure 1, cette vue d'ensemble montrant aussi des paramètres de mise à jour,
- la figure 3, une vue de détail des paramètres de mise à jour.

Certains tableurs, tel que Excel, permettent de manipuler des données de plusieurs tableaux, ces tableaux pouvant être enregistrés dans un fichier unique. Dans un tel fichier contenant plusieurs tableaux, l'entité contenant chaque tableau à l'intérieur du fichier est appelée une feuille ou encore une feuille de calcul.

On se réfère maintenant à la figure 1 sur laquelle est représentée une partie d'une feuille de calcul 1. La feuille de calcul comporte des lignes et des colonnes. Les lignes sont référencées par des nombres entiers 2, ces nombres entiers formant une suite croissante du haut vers le bas de la feuille de calcul. Les colonnes sont référencées par des codes à lettres 3, ces codes à lettres représentant des nombres entiers en base 26, ces nombres entiers formant une suite croissante de gauche à droite de la feuille de calcul. Dans la suite de la description, les références utilisant ces nombres entiers et ces codes à lettres sont notés entre guillemets pour éviter toute confusion avec les références aux dessins.

Cette feuille de calcul comporte une première plage de cellules 4, c'est à dire une zone rectangulaire de la feuille de calcul. La plage de cellule 4 dans cet exemple s'étend de la ligne "41" à la ligne "50" et de la colonne "F" à la colonne "H". Un peut faire référence à cette plage de cellule avec la notation usuelle des tableurs, c'est à dire par "F41:H50".

Cette première plage de cellule 4 comporte des données d'une base de données. La première ligne 5, pouvant aussi être référencée par "F41:H41", comporte des noms de champs. Les lignes suivantes, telle que la ligne 6, contiennent les enregistrements de la base de données. Dans cet exemple, la base de données comporte neuf enregistrements. Chaque colonne correspond à un champ de la base de donnée. Ainsi, la colonne 7 correspond au champ ayant pour nom "Group_Name". Par exemple, le champ "Group_Name" du sixième enregistrement 6 comporte la donnée "Site Interconnection B", cette donnée étant de type texte.

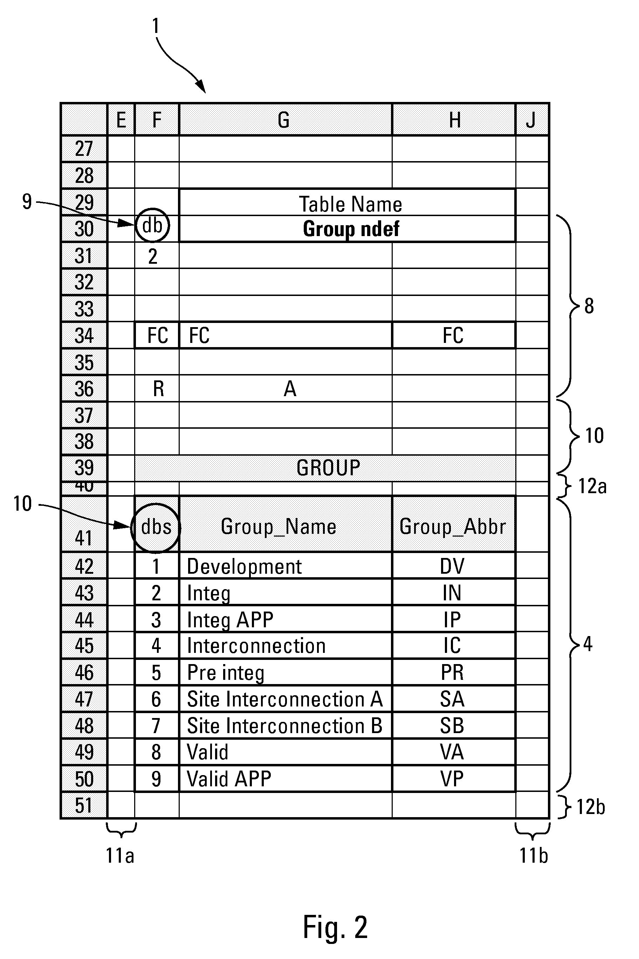

On se réfère maintenant à la figure 2. Une seconde plage de cellules 8 est située au-dessus de la première plage de cellule. La seconde plage 8 s'étend des lignes "30" à "36" et des colonnes "F" à "H". On peut y faire référence par "F30:H36". La seconde plage de cellules 8 comporte des paramètres de mise à jour utilisés par le procédé de mise à jour selon l'invention. Dans cet exemple de mise en oeuvre, la seconde plage de cellules comporte sept lignes.

Plus précisément, les paramètres de mise à jour sont utilisés par des fonctions de mise à jour, chaque fonction de mise à jour étant appliquée à un ensemble déterminé de cellules de la première plage de cellules, chaque fonction de mise à jour utilisant des paramètres de mise à jour contenu dans des cellules déterminées de la seconde plage de cellules.

Afin de permettre de localiser la première et la seconde plage de cellules, on définit des balises de localisation, c'est à dire des codes prédéterminés. Dans cet exemple, les codes sont des chaînes de caractères, la chaîne de caractères "db" formant la balise de localisation de la seconde plage de cellules, la chaîne de caractères "dbs" formant la balise de localisation de la première plage de cellules.

Dans cet exemple, les balises de localisation sont positionnées dans la cellule de la première ligne et de la première colonne de chaque plage de cellules. Ainsi, la balise de localisation "db" est positionnée dans la cellule 9, cette cellule portant aussi la référence "F30". De même, la balise de localisation "dbs" est positionnée dans la cellule 10, cette cellule portant aussi la référence "F41". Quoiqu'il en soit, on détermine la position de la première et de la seconde plages de cellules en recherchant ces balises de localisation, cette recherche étant effectuée avant d'appliquer les fonctions de mise à jour.

Ceci permet de positionner librement les plages de cellules dans une feuille de calcul. On peut ainsi insérer des lignes de commentaires 10 entre la seconde plage de cellules 8 et la première plage de cellules 4. De plus, ceci permet de placer plusieurs bases de données sur une même feuille de calcul, la position de ces bases de données pouvant être déterminée de façon automatique.

Dans cet exemple, les premières et secondes plages de cellules appartiennent à une même feuille de calcul, c'est à dire à un même tableau. Selon une variante de réalisation, on peut placer les premières et secondes plages de cellules dans des feuilles de calcul différentes. L'un des paramètres de mise à jour de la seconde plage de cellules pourra par exemple contenir le nom de la feuille de calcul dans lequel est placée la première plage de cellules.

De préférence, la première plage de cellules, c'est à dire celle correspondant à la base de données, est entourée de cellules vides. Des lignes 12a et 12b de cellules vides sont prévues respectivement au-dessus et au-dessous de la plage de cellules 4. De même des colonnes 11a et 11b de cellules vides sont prévues respectivement à gauche et à droite de la plage de cellules 4. Ceci permet de manipuler plus facilement cette plage de cellules en utilisant les fonctions de base du tableur, la plupart des tableurs considérant qu'un tel agencement de cellules forme une base de données. On peut alors utiliser les fonctions de base du tableur pour manipuler ces données (tri, recherche, extraction, synthèse...).

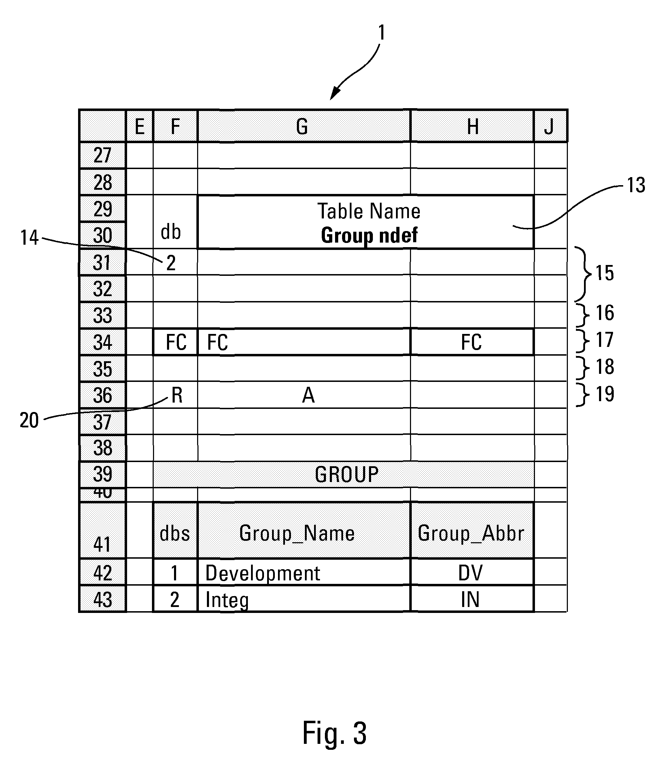

On se réfère maintenant à la figure 3. Les fonctions de mise à jour peuvent être appliquées colonne par colonne à la base de données, en utilisant des paramètres de mise à jour différents pour chaque colonne.

Les paramètres de mise à jour utilisés par une telle fonction de mise à jour sont de préférence localisés dans des cellules dont la position est déterminée de façon relative par rapport à la balise de localisation "db" de la seconde plage de cellules. Par exemple, les paramètres d'une telle fonction de mise à jour peuvent être contenus dans la ligne 18, cette ligne portant aussi la référence "35" dans la feuille de calcul. Lorsqu'une telle fonction de mise à jour est appliquée à une colonne donnée de la base de donnée, le ou les paramètres de mise à jour sont localisés dans une colonne correspondante de ces lignes de paramètres.

Selon un autre mode de réalisation, les paramètres de mise à jour sont localisés dans des cellules comportant des balises de localisation individuelles. Dans la plupart des tableurs, une zone de commentaire, dont le contenu est un texte, est associée à chaque cellule. Les balises de localisation peuvent être alors placées dans la zone de commentaire de ces cellules.

Selon un mode de réalisation avantageux, lorsque la première et la seconde plage de cellules sont placées dans une même feuille de calcul, les paramètres de mise à jour sont localisés dans la colonne à laquelle ladite fonction de mise à jour est appliquée. Ceci peut être généralisé lorsque la première et la seconde plage de cellules sont placées dans des feuilles de calcul différentes.

D'une manière plus générale, les colonnes dans lesquelles sont localisés les paramètres de mise à jour sont rangées dans le même ordre que les colonnes de la première plage de cellules pour lesquelles on utilise ces paramètres de mise à jour.

On décrit maintenant des exemples de fonctions de mise à jour appliquées colonne par colonne. Ces fonctions de mise à jour permettent par exemple de gérer plus simplement des bases de données contenant des champs calculés, des bases de données dont le contenu de certains champs est limité à une liste déterminée, et de mettre en forme et de protéger des champs d'une base de données de façon uniforme

Un champ calculé est un champ dont le contenu est le résultat d'une formule, telle qu'une expression mathématique, un traitement de chaîne de caractères ou une fonction recherche dans une base de données du tableur. Cette formule utilise généralement des arguments contenus dans cette base de données ou dans d'autres bases de données. Les bases de données contenant des champs calculés ne sont pas gérées par les tableurs. Il est possible d'affecter une formule à des cellules individuellement, mais cette formule ne peut être affectée à une colonne entière d'une base de donnée.

Pour maintenir à jour une base de données contenant des champs calculés, l'utilisateur doit penser lors de chaque ajout d'un nouvel enregistrement, à copier les formules adéquates dans les champs calculés de ce nouvel enregistrement. Si l'utilisateur oublie de copier une formule, la base de données comportera des données erronées, qui seront d'autant plus difficile à détecter que le nombre d'enregistrements sera important. De plus, si l'utilisateur souhaite modifier la formule d'un champ calculé, il devra faire cette modification dans tous les enregistrements.

Une fonction de mise à jour permet de résoudre ces problèmes. Cette fonction de mise à jour utilise une ligne de paramètres 18, cette ligne ayant la référence "35" dans la feuille de calcul montrée en exemple. Chaque cellule de la ligne peut contenir une formule ou non. La fonction de mise à jour est appliquée aux cellules de la base de données localisées dans les colonnes pour lesquelles la cellule correspondante de la ligne de paramètres contient effectivement une formule. Par exemple, si la cellule ayant la référence "G35" contient une formule, la fonction de mise à jour est appliquée aux cellules de la colonne "G" de la base de données.

L'application de la fonction de mise à jour consiste au moins pour chacune de ces colonnes à copier la formule contenue dans ladite cellule correspondante de la ligne de paramètres dans les cellules de la colonne considérée de la base de données. La formule contenue dans la cellule "G35" sera ainsi copiée dans toutes les cellules de la colonne "G" de la base de données (à l'exception de la ligne contenant les noms de champ bien entendu), c'est à dire dans les cellules "G42" à "G50".

On décrit maintenant un autre exemple de fonction de mise à jour appliquée colonne par colonne.

Une base de données peut contenir un champ lié à une autre base de données ou plus généralement à une liste. Le champ lié contient une donnée provenant de la base de données ou de la liste à laquelle il est lié. Afin de réaliser ces liaisons, les SGBD utilisent des bases de données relationnelles, c'est à dire des bases de données dans lesquelles les champs liés contiennent une référence à un champ d'un enregistrement d'une autre base de données. Toutefois, la notion même de base de données relationnelle n'existe pas dans les tableurs.

Il existe dans les tableurs une fonction dite de validation, qui permet de spécifier quelles données sont valides pour des cellules individuelles ou des plages de cellules. Cette fonction de validation permet notamment, lors de l'édition du contenu d'une cellule, de restreindre la saisie dans les cellules aux données d'une liste, appelée par la suite liste de validation. En pratique, une liste déroutante peut apparaître lors de l'édition d'une telle cellule. La liste de validation, c'est à dire la liste d'entrées valides, peut être contenue dans une colonne ou dans une ligne.

On peut par exemple affecter une liste de validation à une plage de cellules formant un champ (une colonne) de la base de données. Toutefois, lorsque cette plage augmente raison de l'ajout d'enregistrements, la fonction de validation ne sera pas affectée aux cellules des nouveaux enregistrements. L'utilisateur de la base de données devra alors, soit s'astreindre à saisir uniquement des données de la liste de validation (sans l'aide de la fonction de validation), soit affecter la fonction de validation à la nouvelle plage de cellules.

Une fonction de mise à jour permet de résoudre ces problèmes. Cette fonction de mise à jour utilise une ligne de paramètres 16, cette ligne ayant la référence "33" dans la feuille de calcul montrée en exemple. Chaque cellule de la ligne peut contenir une référence à une liste de validation. La référence peut être par exemple une référence à une plage de cellule, utilisant la convention des tableurs (par exemple "R42:R47" si la liste de validation est contenue dans les lignes "42" à "47" de la colonne "R"), un nom donné à une plage de cellule, ou encore un nom donné à un champ d'une base de données.

La fonction de mise à jour est appliquée aux cellules de la base de données localisées dans les colonnes pour lesquelles la cellule correspondante de la ligne de paramètres contient effectivement une référence à une liste de validation. Par exemple, si la cellule ayant pour référence "H33" contient une référence à une liste, la fonction de mise à jour est appliquée aux cellules de la colonne "H" de la base de données.

L'application de la fonction de mise à jour consiste au moins pour chacune de ces colonnes à affecter la liste de validation dont le nom est contenu dans ladite cellule correspondante de la ligne de paramètres aux cellules de la colonne considérée de la base de données.

Selon une variante de réalisation, une même ligne de paramètre peut être utilisée pour les deux fonctions de mise à jour (formule et liste de validation). En effet, un champ contient soit des données calculées, soit des données saisies. Il ne peut y avoir par conséquent à la fois une liste de validation et une formule dans une même colonne. Les fonctions de mise à jour décrites fonctionneront de la même façon, les cellules de la ligne de paramètre pouvant contenir soit une formule, soit une référence à une liste de validation, soit un autre type de données (non prise en considération), soit être vide.

On décrit maintenant un autre exemple de fonction de mise à jour appliquée colonne par colonne.

Un tableur permet d'afficher les cellules avec une mise en forme particulière pour chaque cellule. Cette mise en forme peut concerner par exemple le formatage de l'affichage des nombres (sous forme de monnaies, de date, avec une certaine précision...), l'alignement dans la cellule (affichage à droite, à gauche, au milieu...de la cellule), les caractéristiques de polices (fonte, taille, couleur...), la bordure (traits d'encadrement de la cellule...), les motifs (couleur de fond, texture de fond...).

Un tableur permet de définir si une cellule est protégée ou non, c'est à dire si son contenu peut ou non être modifié par un utilisateur.

Quoiqu'il en soit, la mise en forme et la protection sont des attributs des cellules. Ils sont définis individuellement pour chaque cellule. Une fonction de mise à jour permet de définir ces attributs pour des champs de la base de données. Cette fonction permet ainsi d'éviter d'avoir à s'astreindre à mettre en forme ou à modifier la protection des cellules des nouveaux enregistrements d'une base de données.

Cette fonction de mise à jour utilise au moins une ligne de paramètres 17, cette ligne ayant la référence "34" dans la feuille de calcul montrée en exemple. Chaque cellule de cette ligne peut contenir un code ou non. Par exemple, les codes utilisés peuvent être compris dans la liste suivante : "F", "FC", "P", "UP", "FP", "FCP", "FUP", "FCUP".

L'application de la fonction de mise à jour consiste au moins à appliquer un ou plusieurs attributs d'une cellule de la ligne de paramètres aux cellules de la colonne correspondante de la base de données, les attributs appliqués étant déterminés par le code.

Dans cet exemple, les attributs appliqués sont des attributs de mise en forme et/ou de protection.

Lorsqu'une cellule de la ligne de paramètre contient le code "F", "FP" ou "FUP", ses attributs de mise en forme, à l'exception de la couleur, sont appliqués aux cellules de la colonne correspondante de la base de données.

De même, lorsqu'une cellule de la ligne de paramètre contient le code "FC", "FCP" ou "FCUP", ses attributs de mise en forme, y compris la couleur, sont appliqués aux cellules de la colonne correspondante de la base de données. Ainsi, le texte dans la cellule "G34" étant aligné à gauche, il en sera de même pour les cellules de la colonne "G" de la base de données.

Lorsqu'une cellule de la ligne de paramètre contient le code "P", "FP" ou "FCP", les cellules de la colonne correspondante de la base de données sont protégées.

Lorsqu'une cellule de la ligne de paramètre contient le code "UP", "FUP" ou "FCUP", les cellules de la colonne correspondante de la base de données ne sont pas protégées.

Ainsi, lorsque les attributs lorsque les attributs appliqués sont des attributs de mise en forme (codes contenant "F"), ces attributs sont issus de la cellule considérée de la ligne de paramètres. Ceci permet de contrôler simplement l'apparence des champs d'une base de données.

Selon l'invention, on peut aussi appliquer des fonctions de mise à jour à l'ensemble des cellules de la base de données. Ces fonctions de mise à jours permettent par exemple d'appliquer une coloration alternative aux lignes de la base de données, de trier les lignes selon des critères déterminés, de numéroter les enregistrements...

Les paramètres de la fonction de mise à jour permettant une coloration alternative peuvent être par exemple un nombre entier et deux couleurs. La fonction applique les couleurs alternativement aux enregistrements, d'abord N lignes avec la première couleur, ensuite N lignes avec la seconde couleur, et ainsi de suite, N étant le nombre entier utilisé comme paramètre par cette fonction. Dans cet exemple, le nombre N est contenu dans la cellule 14 de la seconde plage de cellules. Les couleurs appliquées aux lignes sont celles des cellules des lignes 15, par exemple la couleur de la cellule "G31" et la couleur de la cellule "G32". Si la cellule 14 ne contient aucun nombre ou un nombre nul, la fonction de mise à jour n'est pas appliquée à la base de données.

On décrit maintenant une autre fonction de mise à jour, permettant de trier l'ensemble des lignes de la base de données. Cette fonction de mise à jour peut utiliser une ligne de paramètres, telle que la ligne 19. Les cellules de la ligne de paramètre contiennent des codes, par exemple les lettres "A", "B", "C", ... Les enregistrements de la base de données sont trié par ordre croissant du contenu des cellules de la colonne contenant le code "A", puis par ordre croissant du contenu des cellules de la colonne contenant le code "B"... On peut ainsi définir des clefs de tri principales et secondaires, permettant de trier les lignes de la base de données selon un ordre défini par le contenu de cellules déterminées de la seconde plage de cellules.

Dans cet exemple, les enregistrements sont triés par ordre croissant du contenu de la colonne "G", l'unique colonne de la ligne de paramètres contenant le code "A". Les enregistrements de la base de données sont donc triés selon le champ "Group_Name".

On décrit maintenant une autre fonction de mise à jour, permettant de numéroter les enregistrements (lignes) de la base de donnée. Cette fonction de mise à jour consiste au moins à numéroter les lignes de la base de données si un code déterminé est présent dans la seconde plage de cellule. Ce code peut être par exemple la lettre "R". Il peut être situé dans la cellule 20, ayant aussi pour référence "F36" dans la feuille de calcul montrée en exemple. La numérotation forme un champ de la base de données. Ce champ est de préférence celui situé sous la balise de localisation. Si la cellule 20 est vide, la numérotation automatique n'est pas effectuée.

Les tableurs permettent de nommer des plages de cellules. Les noms peuvent être utilisés dans des fonctions, en particulier dans les fonctions de mise à jour. Ils peuvent être aussi utilisés comme arguments dans des formules pour réaliser des calculs. Quoiqu'il en soit, les plages nommées permettent de simplifier la référence à une plage de cellules. Lorsqu'une plage de cellules nommée augmente ou diminue, les formules ou fonctions utilisant ce nom reflètent automatiquement ces modifications.

Toutefois, il est nécessaire de modifier l'étendue des plages de cellules nommées faisant référence à la base de données ou à des champs de la base de données à chaque fois qu'un enregistrement est ajouté ou supprimé.

A cet effet, des fonctions de mise à jour peuvent être utilisées pour attribuer des noms de façon automatique. Une première fonction de mise à jour peut attribuer un nom à la base de données, c'est à dire à la première plage de cellules. Le nom attribué peut être localisé dans une cellule déterminée 13 de la seconde plage de cellules.

Une seconde fonction de mise à jour peut attribuer un nom à des champs de la base de données, c'est à dire à des colonnes de la première plage de cellules. Le nom attribué à une colonne peut être déterminé à partir de celui attribué à la base de données, c'est à dire à partir de la chaîne de caractères localisée dans la cellule 13, auquel on concatène le nom du champ considéré, c'est à dire le contenu de la cellule de la première ligne 5 et de la même colonne de la première plage de cellules.

Ceci permet d'attribuer un nom unique aux colonnes, même si plusieurs bases de données d'un même fichier contiennent des champs de même nom. On évite de plus de construire les noms avec les noms des feuilles de calcul, ce qui permet de modifier les noms des feuilles de calcul ultérieurement.

Les noms acceptés par certains tableurs ne doivent comporter que des caractères alphanumériques, aucun espace, et seulement certains caractères de ponctuation, les autres caractères étant interdits. Afin de respecter cette contrainte, on peut réaliser une opération de substitution de caractères, avant d'attribuer des noms aux plages de cellules, de manière à remplacer les caractères interdits dans les noms de plages de cellules par des caractères autorisés, tel que le caractère "_".

Le procédé selon l'invention peut être mise en oeuvre par une commande programmée en utilisant une interface de programmation du tableur, c'est à dire une API (acronyme de l'expression anglo-saxonne "Application Programming Interface"). Par exemple, la commande de mise à jour peut être programmée en Visual Basic dans Excel.

La commande peut appliquer une ou plusieurs fonctions de mise à jour décrites ci-dessus. Par exemple, la commande de mise à jour peut :
1. nommer la première plage de cellules avec le nom de la base de données,
2. nommer les champs de la base de données,
3. affecter les critères de validations aux cellules des champs concernés,
4. copier les formules dans les cellules des champs concernés,
5. mettre en forme et/ou protéger des cellules colonne par colonne,
6. trier les enregistrements de la base de données selon des critères définit par des cellules de la seconde plage de cellules,
7. numéroter les enregistrements si un code est présent dans une cellule déterminée de la seconde plage de cellules,
8. colorer les lignes de la base de données alternativement en fonction de paramètres contenus dans la seconde plage de cellules.

Le procédé de mise à jour selon l'invention peut être aussi mis en oeuvre sur des données réparties dans plusieurs fichiers différents.

## Revendications

1. Procédé de mise à jour d'une base de données contenue dans un tableau (1) manipulable par un tableur, **caractérisé en ce que** les données de la base de données étant localisées dans une première plage de cellules (4), des paramètres de mise à jour étant localisés dans une seconde plage de cellules (8), on applique au moins une fonction de mise à jour à un ensemble déterminé de cellules de la première plage de cellules, chaque fonction de mise à jour utilisant des paramètres de mise à jour contenus dans des cellules déterminées (14, 15, ..., 20) de la seconde plage de cellules, la seconde plage de cellules étant placée au-dessus de la première plage de cellules, dans un même tableau.

2. Procédé selon la revendication 1 dans lequel la première plage de cellules et la seconde plage de cellules contenant chacune une balise de localisation (9, 10), on détermine la position desdites premières et secondes plages de cellules en recherchant lesdites balises, l'étape de détermination de la position précédant l'application des fonctions de mise à jour.

3. Procédé selon la revendication 1 dans lequel les paramètres d'au moins une fonction de mise à jour déterminée étant localisés dans une ou plusieurs lignes de paramètres déterminées, les lignes de paramètres appartenant à la seconde plage de cellules, cette fonction de mise à jour est appliquée colonne par colonne (7) aux cellules de la base de données, les paramètres utilisés pour la mise à jour d'une colonne de la base de données étant contenus dans les cellules appartenant à une colonne correspondante des lignes de paramètres.

4. Procédé selon la revendication 3 dans lequel la fonction de mise à jour utilise une ligne de paramètres (18), chaque cellule de la ligne pouvant contenir une formule ou non, la fonction de mise à jour étant appliquée aux cellules de la base de données localisées dans les colonnes pour lesquelles la cellule correspondante de la ligne de paramètres contient effectivement une formule, l'application de la fonction de mise à jour consistant au moins pour chacune de ces colonnes à copier la formule contenue dans ladite cellule correspondante de la ligne de paramètres dans les cellules de la colonne considérée de la base de données.

5. Procédé selon la revendication 3 dans lequel la fonction de mise à jour utilise une ligne de paramètres (16), chaque cellule de la ligne pouvant contenir une référence à une liste de validation, la fonction de mise à jour étant appliquée aux cellules de la base de données localisées dans les colonnes pour lesquelles la cellule correspondante de la ligne de paramètres contient effectivement une référence à une liste de validation, l'application de la fonction de mise à jour consistant au moins pour chacune de ces colonnes à affecter la liste de validation dont le nom est contenu dans ladite cellule correspondante de la ligne de paramètres aux cellules de la colonne considérée de la base de données.

6. Procédé selon la revendication 3 dans lequel la fonction de mise à jour utilise au moins une ligne de paramètres (17), chaque cellule de cette ligne pouvant contenir un code ou non, l'application de la fonction de mise à jour consistant au moins à appliquer un ou plusieurs attributs déterminés aux cellules de la colonne correspondante de la base de données, les attributs appliqués étant déterminés par le code.

7. Procédé selon la revendication 6 dans lequel les attributs appliqués sont des attributs de mise en forme et/ou de protection.

8. Procédé selon la revendication 7 dans lequel lorsque les attributs appliqués sont des attributs de mise en forme, ces attributs sont issus de la cellule considérée de la ligne de paramètres.

9. Procédé selon la revendication 1 dans lequel au moins une fonction de mise à jour déterminée est appliquée ligne par ligne à l'ensemble des cellules de la base de données.

10. Procédé selon la revendication 9 dans lequel la fonction de mise à jour consiste au moins à appliquer une coloration alternative aux lignes de la base de donnée.

11. Procédé selon la revendication 9 dans lequel la fonction de mise à jour consiste au moins à trier les lignes de la base de données selon un ordre défini par le contenu de cellules déterminées de la seconde plage de cellules.

12. Procédé selon la revendication 9 dans lequel la fonction de mise à jour consiste au moins à numéroter les lignes de la base de données si un code déterminé est présent dans la seconde plage de cellule, la numérotation formant un champ de la base de données.

13. Procédé selon la revendication 9 dans lequel la fonction de mise à jour consiste au moins à attribuer un nom à la première plage de cellules à partir du contenu d'une cellule déterminée (13) de la seconde plage de cellules.

14. Procédé selon la revendication 9 dans lequel la fonction de mise à jour consiste au moins à attribuer un nom à des colonnes de la première plage de cellules, les noms étant déterminés à partir du contenu d'une cellule déterminée (13) de la seconde plage de cellules d'une part, et du contenu de la cellule de la première ligne (5) et de la même colonne de la première plage de cellules.
